# EUROPEAN PATENT APPLICATION

(11) **EP 4 745 425 A2**
(43) Date of publication of application: **20.05.2026**
(21) Application number: 25210689.3
(22) Date of filing: 23.10.2025
(51) Int. Cl.: F16D 65/00, F16D 65/18

(54) **AN ENGINE SYSTEM, AND A METHOD OF OPERATING A BRAKE ASSEMBLY FOR AN ENGINE SYSTEM**

(30) Priority: 24.10.2024 IN 202441080938
(71) Applicant: Cummins, Inc., Columbus, Indiana 47201 (US)
(72) Inventor: MARKHEDKAR, Saurabh, 411033 Pune (IN); CHANDRAS, Pavan, 500047 Hyderabad (IN); MATHEW, Ronny, 411045 Pune (IN); POONAWALA, Yusuf, 411048 Pune (IN); THAKUR, Dipender, 411045 Pune (IN)
(74) Representative: Cleveland Scott York

(57) **Abstract**

An engine system (100) includes an engine (102), a crankshaft (104) operatively coupled to the engine (102), a brake assembly (120), and an actuator assembly (140). The brake assembly (120) includes a brake disc (122). The brake disc (122) is coupled to the crankshaft (104). The actuator assembly (140) includes a brake pad (145) and an actuator (142). The brake pad (145) is selectively positionable to contact the brake disc (122). The actuator (142) is configured to selectively position the brake pad (145) to contact the brake disc (122).

## Description

### CROSS-REFERENCE TO RELATED APPLICATIONS

This Application claims the benefit of and priority to Indian Provisional Application No. 202441080938, filed October 24, 2024 and Indian Non-Provisional Application No. 202441080938, filed September 1, 2025, the contents of which are incorporated herein by reference in their entireties.

### FIELD

The present application generally relates to a brake assembly for use with an engine system.

### BACKGROUND

During operation of an internal combustion engine, fuel is combusted to rotate an output shaft (e.g., a crankshaft, etc.). There are situations where it may be desirable to selectively reduce the speed of the engine or the output shaft. For example, when the internal combustion engine is provided in a vehicle system, it may be desirable to reduce the speed of the engine to facilitate reducing a speed of the vehicle.

### SUMMARY

One embodiment relates to an engine system. The engine system includes an engine, a crankshaft operatively coupled to the engine, a brake assembly, and an actuator assembly. The brake assembly includes a brake disc. The brake disc is coupled to the crankshaft. The actuator assembly includes a brake pad and an actuator. The brake pad is selectively positionable to contact the brake disc. The actuator is configured to selectively position the brake pad to contact the brake disc.

Another embodiment relates to a method of operating a brake assembly for an engine system. The method includes receiving, by a controller, data regarding operation of the engine system, the engine system comprising the brake assembly having a brake disc and an actuator assembly having a brake pad and an actuator; determining, by the controller, a braking torque value based on the received data; responsive to the braking torque value being above a predetermined threshold, generating, by the controller, a disc brake command; and implementing, by the controller, the disc brake command comprising causing the actuator to position the brake pad so as to contact the brake disc.

### BRIEF DESCRIPTION OF THE DRAWINGS

FIG. 1 is a schematic block diagram of an engine system, according to an example embodiment.
FIG. 2 is a perspective view of an example engine system in accordance with the arrangement of FIG. 1.
FIG. 3 is a perspective view showing a portion of the engine system of FIG. 2 in a partially disassembled state.
FIG. 4 is a perspective view of an example brake assembly and an actuator assembly usable in the engine systems of FIGS. 1-5, according to an example embodiment.
FIG. 5 is a block diagram of an example method of controlling the actuator assembly of FIG. 4.

### DETAILED DESCRIPTION

In the following detailed description, reference is made to the accompanying drawings, which form a part hereof. In the drawings, similar symbols typically identify similar components, unless context dictates otherwise. The illustrative embodiments described in the detailed description, drawings, and claims are not meant to be limiting. Other embodiments may be utilized, and other changes may be made, without departing from the spirit or scope of the subject matter presented here. It will be readily understood that the aspects of the present disclosure, as generally described herein, and illustrated in the figures, can be arranged, substituted, combined, and designed in a wide variety of different configurations, all of which are explicitly contemplated and made part of this disclosure.

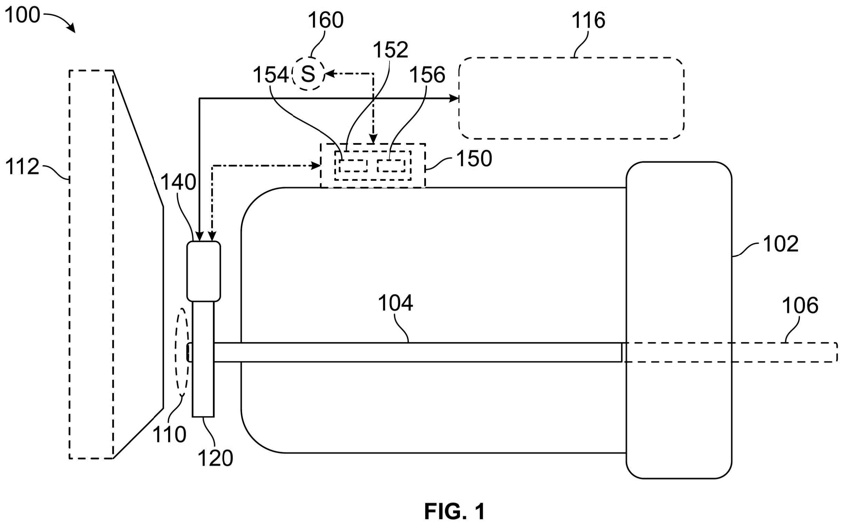

As represented and shown in FIGS. 1-4, an engine system 100 includes engine 102. The engine system 100 includes a crankshaft 104 that is operatively coupled to the engine 102. The engine system 100 includes a brake assembly 120 including a brake disc 122. The brake disc 122 is coupled to the crankshaft 104. The engine system 100 includes an actuator assembly 140 including an actuator 142 and a brake pad 145. The brake pad 145 is selectively positionable to contact the brake disc 122. The actuator 142 is configured to selectively position the brake pad 145 to contact the brake disc 122. These and other components are described in greater detail herein below.

As shown in FIG. 1, the engine system 100 optionally includes one or more additional components, shown in dashed lines. For example, the engine system 100 can optionally include one or more of a driveline 106, a vibration damper 110, a radiator assembly 112, a compressed gas source 116, a controller 150, and/or a grade sensor 160.

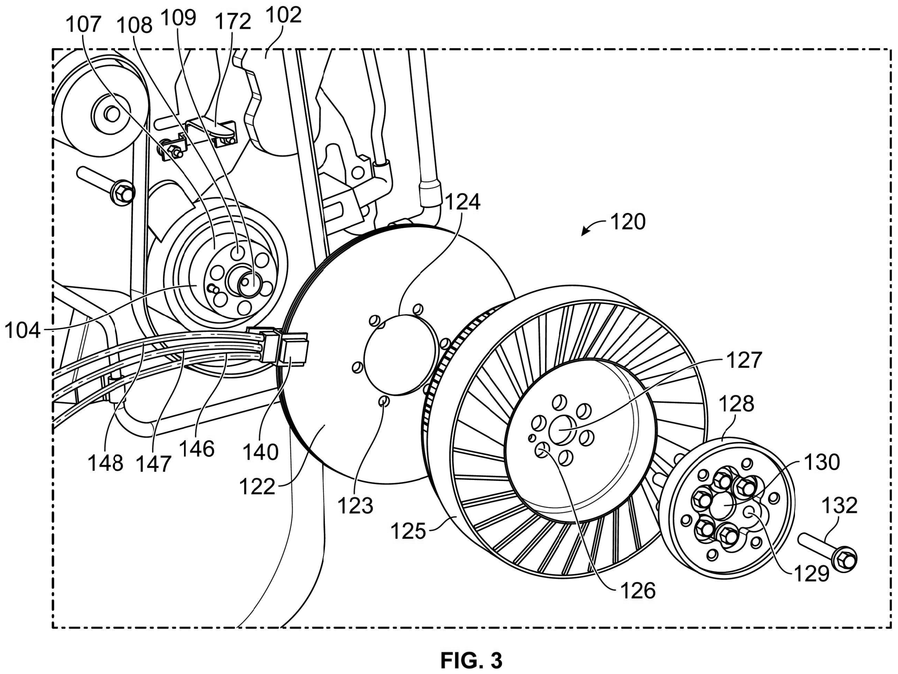

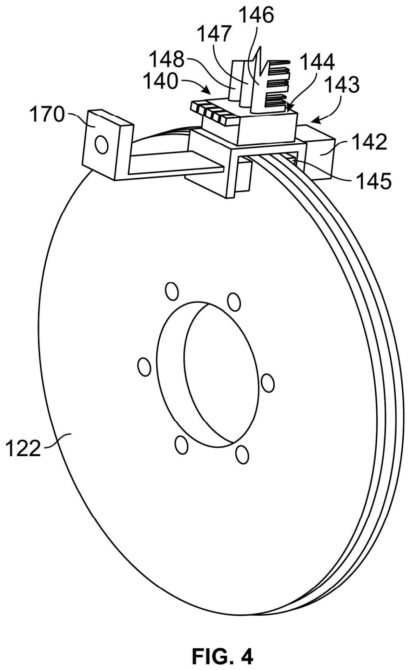

In some embodiments, the engine 102 is a hydrogen internal combustion engine. The hydrogen internal combustion engine is configured to combust hydrogen fuel to generate power. The power is used to rotate the crankshaft 104. During operation of the engine 102, it may be desirable to selectively decrease a speed (e.g., a rotational speed) of the crankshaft 104. For example, when the engine 102 is provided in a vehicle, it may be desirable to reduce the speed of the crankshaft 104 when decreasing a speed of the vehicle. As described herein, the brake assembly 120 includes a brake disc 122 (shown in FIG. 3 and FIG. 4) that is coupled to the crankshaft 104. The brake pad 145 (shown in FIG. 4) is selectively positionable to contact the brake disc 122. When the brake pad 145 engages, i.e., is in contact with, the brake disc 122, frictional forces between the brake pad 145 and the brake disc 122 reduce the speed of the crankshaft 104. This arrangement provides additional ability to reduce the speed of the crankshaft 104 beyond, for example, using engine braking.

As shown in FIG. 1, the engine system 100 includes the driveline 106 coupled to the crankshaft 104 at a crankshaft first end. The brake assembly 120 is coupled to the crankshaft 104 at a crankshaft second end, opposite the crankshaft first end. In some embodiments, the engine system 100 does not include the driveline 106.

As shown in FIG. 1, the engine system 100 includes the vibration damper 110. The vibration damper 110 is coupled to the crankshaft 104, proximate the brake assembly 120. The vibration damper 110 is configured to mitigate (e.g., dampen) vibrations in the crankshaft when the brake pad 145 engages, i.e., is in contact with, the brake disc 122. In some embodiments, the engine system 100 does not include the vibration damper 110.

As shown in FIG. 1, the engine system 100 includes the radiator assembly 112. The radiator assembly 112 is positioned proximate the brake assembly 120. In some embodiments, the radiator assembly 112 is configured to cool a coolant of the engine 102. In other embodiments, the radiator assembly 112 is configured as a charge air cooler that is configured to cool air received from a turbo device (e.g., a turbocharger, a supercharger, etc.).

The radiator assembly 112 may include a heat exchanger and/or a fan (not shown). The heat exchanger is configured to facilitate heat exchange between air and a working fluid, such as the coolant of the engine 102 and/or the air received from the turbo device. The fan is configured to provide air (e.g., ambient air) through the heat exchanger.

The radiator assembly 112 is positioned such that air (e.g., the ambient air) flowing through the radiator assembly 112 flows towards and/or over the brake assembly 120. In this way, the brake assembly 120 is cooled by the air flowing over the brake assembly 120. In some embodiments, the engine system 100 does not include the radiator assembly 112.

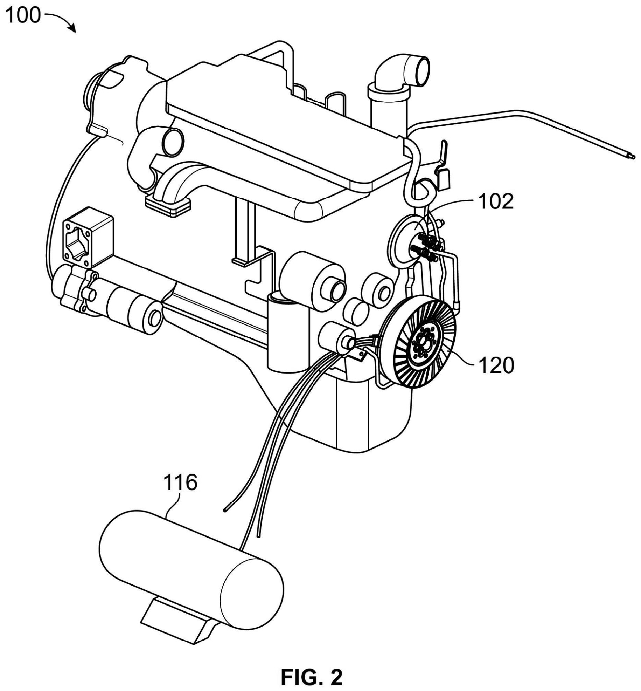

As shown in FIG. 1 and 2, the engine system 100 includes the compressed gas source 116. The compressed gas source 116, for example an air tank, is fluidly coupled to the brake pad 145, such that the compressed gas source 116 selectively provides gas (e.g., compressed air) to the brake pad 145. More specifically, the actuator 142 is configured to selectively cause the compressed gas source 116 to provide the gas to the brake pad 145. For example, the actuator 142 may actuate a valve to release compressed gas from the compressed gas source 116, thereby causing the brake pad 145 to move due to the pneumatic forces of the compressed gas. When the compressed gas source 116 provides the gas to the brake pad 145, the brake pad 145 contacts the brake disc 122. In some embodiments, the engine system 100 does not include the compressed gas source 116.

As shown in FIG. 1, the engine system 100 includes the controller 150. The controller 150 includes a processing circuit 152. The processing circuit 152 includes a processor 154. The processing circuit 152 also includes a memory device 156. The processing circuit 152 may be structured or configured to execute or implement the instructions, commands, and/or control processes described herein. In some embodiments, the engine system 100 does not include the controller 150.

The processing circuit 152 can include one or more analog circuits, electronic circuits (e.g., integrated circuits (IC), discrete circuits, system on a chip (SOC) circuits, microcontrollers, etc.), telecommunication circuits, hybrid circuits, and any other type of "circuit." In this regard, the processing circuit 152 may include any type of component for accomplishing or facilitating achievement of the operations described herein. For example, a circuit as described herein may include one or more transistors, logic gates (e.g., NAND, AND, NOR, OR, XOR, NOT, XNOR, etc.), resistors, multiplexers, registers, capacitors, inductors, diodes, wiring, and so on. The processing circuit 152 may also include or be programmable hardware devices such as field programmable gate arrays, programmable array logic, programmable logic devices or the like.

The processor 154 may be implemented as one or more single- or multi-chip processors, digital signal processors (DSPs), application specific integrated circuits (ASICs), field programmable gate arrays (FPGAs), and/or suitable processors (e.g., other programmable logic devices, discrete hardware components, etc. to perform the functions described herein). A processor may be a microprocessor, a group of processors, etc. A processor also may be implemented as a combination of computing devices, such as a combination of a DSP and a microprocessor, a plurality of microprocessors, one or more microprocessors in conjunction with a DSP core, or any other such configuration. In some embodiments, the one or more processors may be shared by multiple circuits. Alternatively or additionally, the one or more processors may be structured to perform or otherwise execute certain operations independent of one or more coprocessors. In other example embodiments, two or more processors may be coupled via a bus to enable independent, parallel, pipelined, or multi-threaded instruction execution. All such variations are intended to fall within the scope of the present disclosure.

The memory device 156 (e.g., memory, memory unit, storage device) may include one or more devices (e.g., RAM, ROM, Flash memory, hard disk storage) for storing data and/or computer code for completing or facilitating the various processes, layers and modules described in the present disclosure. For example, the memory device 156 may include dynamic random-access memory (DRAM). The memory device 156 may be communicably connected to the processor 154 to provide computer code or instructions to the processor 154 for executing at least some of the processes described herein. Moreover, the memory device 156 may be or include tangible, non-transient volatile memory or non-volatile memory. Accordingly, the memory device 156 may include database components, object code components, script components, or any other type of information structure for supporting the various activities and information structures described herein.

The controller 150 is communicatively coupled to the actuator 142. The controller 150 is configured to facilitate operation of the brake assembly 120 by operating the actuator 142. Specifically, the controller 150 is configured to adjust (e.g., modulate, select, etc.) the position of the actuator 142 to facilitate engaging the brake pad 145 with the brake disc 122.

As shown in FIG. 1, the engine system 100 includes the grade sensor 160. The grade sensor 160 is configured to acquire data regarding a grade (e.g., slope) of a road on which a vehicle embodying the engine system 100 is traveling. For example, the grade sensor 160 can include a sensing device that acquires data regarding the vehicle's incline position. The grade sensor 160 is configured to provide the controller 150 with a signal associated with the grade. The controller 150 is configured to receive the signal associated with the grade from the grade sensor 160. The controller 150 is configured to determine the grade based on this signal. In some embodiments, the grade sensor 160 is capable of providing a signal associated with a grade between 0% and 10% (inclusive), such as between 0% and 7% (inclusive). In some embodiments, the engine system 100 does not include the grade sensor 160.

As shown in FIG. 3, the crankshaft 104 includes a crankshaft body 107. The crankshaft body 107 defines one or more crankshaft openings 108. The one or more crankshaft openings 108 are sized to receive at least a portion of a fastener 132. An interior surface of the crankshaft body 107, within the one or more crankshaft openings 108 can be threaded such that the fastener 132 can threadably engage with the crankshaft body 107.

The crankshaft 104 also includes a crankshaft flange 109. The crankshaft flange 109 extends axially outward from an end surface of the crankshaft body 107 (e.g., at the second end of the crankshaft 104) in a direction towards the brake assembly 120 and away from the driveline 106. As described in greater detail below, at least a portion of the brake assembly 120 is configured to receive at least a portion of the crankshaft flange.

As shown in FIG. 3, the brake assembly 120 includes the brake disc 122. The brake disc 122 is substantially annular in shape. Outward facing surfaces of the brake disc 122 are or include a metal, ceramic, or other suitable material having a desirable friction coefficient. The brake disc 122 defines one or more brake disc outer openings 123 that are each sized to receive at least a portion of the fastener 132 therein. The brake disc 122 defines a brake disc inner opening 124 that is sized to receive at least a portion of the crankshaft 104 therein. More specifically, the inner opening 124 is sized to receive the crankshaft body 107 therein.

As shown in FIG. 3, the brake assembly 120 includes a cover 125. The cover 125 is positioned around the brake disc 122. The cover 125 defines one or more cover outer openings 126 that are each sized to receive at least a portion of the fastener 132 therein. The cover 125 defines a cover inner opening 127 that is sized to receive at least a portion of the crankshaft 104 therein. More specifically, the cover inner opening 127 is sized to receive the crankshaft flange 109 therein.

As shown in FIG. 3, the brake assembly 120 includes a brake mounting member 128. The brake mounting member 128 is positioned away from the brake disc 122, such that the cover 125 is between the brake disc 122 and the brake mounting member 128. The brake mounting member 128 defines one or more mounting member outer openings 129 that are each sized to receive at least a portion of the fastener 132 therein. The brake mounting member 128 defines a mounting member inner opening 129 that is sized to receive at least a portion of the crankshaft 104 therein. More specifically, the mounting member inner opening 129 is sized to receive the crankshaft flange 109 therein.

The fastener 132 is configured to couple the brake assembly 120 to the crankshaft 104. More specifically, when the fastener 132 is provided through the corresponding brake disc outer opening 123, the corresponding cover outer opening 126, and the corresponding mounting member outer opening 129 and engaged with the threads inside the crankshaft openings 108, the fastener 132 couples the brake assembly 120 to the crankshaft 104.

As shown in FIG. 4, the actuator assembly 140 includes the actuator 142. As described above, the actuator 142 is configured to selectively position the brake pad 145 to contact the brake disc 122. More specifically, the actuator 142 is configured to selectively cause the compressed gas source 116 to provide the gas to the brake pad 145 such that the brake pad 145 is caused to move due to the pneumatic forces of the gas received from the compressed gas source 116.

As shown in FIG. 4, the actuator assembly 140 includes a temperature sensor 143. The temperature sensor 143 is configured to acquire data regarding a temperature of the brake disc 122 and/or the brake pad 145. The temperature sensor 143 is configured to provide the controller 150 with a signal associated with the temperature of the brake disc 122 and/or the brake pad 145. The controller 150 is configured to receive the signal associated with the temperature from the temperature sensor 143. The controller 150 is configured to determine the temperature based on this signal. In some embodiments, the temperature sensor 143 is capable of providing a signal associated with a temperature between 0°C and 500°C (inclusive).

As shown in FIG. 4, the actuator assembly 140 includes a harness 144. The harness 144 is configured to facilitate coupling one or more components of the engine system 100 to one or more components of the actuator assembly 140. The harness 144 facilitates coupling a first data transmission line 146 from the controller 150 to the actuator 142. The first data transmission line 146 facilitates communication between the controller 150 and the actuator 142. The harness 144 facilitates coupling a second data transmission line 147 from the controller 150 to the temperature sensor 143. The second data transmission line 147 facilitates communication between the controller 150 and the temperature sensor 143. The harness 144 facilitates coupling a pneumatic conduit 148 from the compressed gas source 116 to the actuator 142. The pneumatic conduit 148 enables fluid communication between the compressed gas source 116 and the actuator 142.

As shown in FIG. 4, the actuator assembly 140 includes the brake pad 145. The brake pad 145 is positioned proximate an outside surface of the brake disc 122. The brake pad 145 can include an organic material (e.g., rubber, silica, etc.), a semi-metallic material (e.g., a mixture of one or more organic materials and one or more metallic materials), a sintered or metallic material (e.g., a metal material that is pressed together to from the brake pad), a ceramic material, or other suitable material. As described above, the brake pad 145 is configured to selectively contact the brake disc 122. More specifically, the brake pad 145 is configured to be repositioned by the actuator 142, as described above. In some embodiments, the actuator assembly 140 includes two brake pads 145, and each brake pad is positioned on opposite sides of the brake disc 122.

As shown in FIG. 4, the actuator assembly 140 includes an actuator mounting member 170. The actuator mounting member 170 is configured to facilitate mounting the actuator assembly 140 to the engine 102. The actuator mounting member 170 is configured to couple to at least a portion of the engine 102. For example, as shown in FIG. 3, the actuator mounting member 170 is configured to couple to a mounting portion 172 of the engine 102. The mounting portion 172 is positioned proximate the second end of the crankshaft 104 and is spaced away from the crankshaft 104 such that at least a portion of the actuator assembly 140 is positioned between the mounting portion 172 and the crankshaft 104.

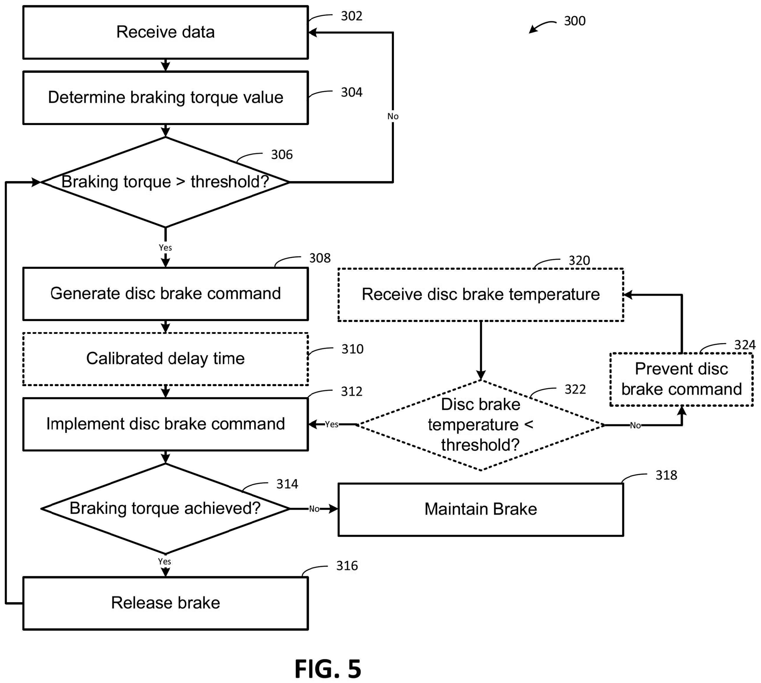

A flow diagram of an example method 300 of operating the brake assembly 120 is shown in FIG. 5. The controller 150 receives data regarding operation of the engine system 100. The controller 150 determines a braking torque value based on the received data. Responsive to the braking torque value being above a predetermined threshold, the controller 150 generates a disc brake command. The controller 150 implements the disc brake command, thereby causing the actuator 142 to position the brake pad 145 so as to contact the brake disc 122.

The method 300 may be performed by a computing system, such as the controller 150. It should be understood that the order of the method 300 is shown as an example only. That is, one or more processes may be performed concurrently, partially concurrently, sequentially, and/or in a different order than as shown in FIG. 4. Additionally, certain processes of the method 300 may be combined or deleted/omitted. For example, the processes shown in dashed lines are optional and may be omitted.

At process 302, the controller 150 receives data regarding operation of the engine system 100. The data regarding operation of the engine system 100 includes a vehicle speed value (e.g., a speed of a vehicle embodying the engine system 100), an accelerator pedal position, a clutch switch position, a gradient sensor value, an engine fueling value (e.g., a fueling amount, an air-to-fuel ratio, etc.), a boost pressure value, and so on. In some embodiments, the data can include information regarding a speed of the engine 102, a rotational speed of the crankshaft 104, a speed of a vehicle embodying the engine system 100, and so on.

In some embodiments, the data can include information regarding a brake demand value. The brake demand value is an amount of braking power, measured in horsepower or watts, that is requested of the engine system (e.g., by a user). For example, a user may depress a brake pedal in a vehicle embodying the engine system 100, and the deflection of the brake pedal corresponds to the brake demand value. In some embodiments, the brake demand value is based on one or more of the vehicle speed value, the accelerator pedal position, the clutch switch position, the gradient sensor value, the engine fueling value, and/or the boost pressure value. For example, as the vehicle speed value, the accelerator pedal position, the engine fueling value, and/or the boost pressure value increase (individually or together), the brake demand value increases. Similarly, as the gradient sensor value decreases (e.g., from positive or zero to negative), the brake demand value increases.

In some embodiments, the data includes a braking capability of the engine system 100. The braking capability is an amount of braking power that the engine 102 can provide via engine braking and/or an amount of braking power from a service brake of a vehicle embodying the engine system 100.

At process 304, the controller 150 determines a braking torque value based on the received data. The braking torque value is an amount of braking torque required to achieve the brake demand value. In an example arrangement, the brake demand value (e.g., a power value) is directly related to the braking torque and the angular velocity of the crankshaft 104, and the controller 150 can calculate the braking torque value based on this relationship.

At process 306, the controller 150 compares the braking torque value to a predetermined threshold. Responsive to the braking torque value being above the predetermined threshold, the method 300 proceeds to process 308. Responsive to the braking torque value being at or below the predetermined threshold, the method 300 returns to process 302.

In some embodiments, the predetermined threshold is based on the braking capability of the engine system 100. For example, the predetermined threshold can be a maximum braking torque that can be provided by systems of the engine system 100 other than the brake assembly 120, and more specifically the maximum braking torque that the engine 102 can provide via engine braking and/or the maximum braking torque that the service brake of the vehicle embodying the engine system 100 can provide.

At process 308, responsive to the braking torque value being above a predetermined threshold, the controller 150 generates a disc brake command. The disc brake command is configured to enable operation of the brake assembly 120. More specifically, the disc brake command is configured to cause the actuator 142 to position the brake pad 145 so as to contact the brake disc 122.

At process 310, after generating the disc brake command, the controller 150 waits for a calibrated delay time. The calibrated delay time is a predetermined amount of time, which may be between 1 millisecond and 1 second, such as 30 milliseconds. The calibrated delay time can be set by a user, such as an operator of the engine system 100 or a manufacturer of the engine system 100 (or one or more components thereof). Process 310 is optional and may be omitted.

When process 310 is included in the method 300, the method 300 proceeds to process 312 after process 310. In these embodiments, the disc brake command is implemented after a predetermined time period (e.g., the calibrated delay time) beginning after generating the disc brake command at process 308. The implementation of the disc brake command causes the actuator 142 to position the brake pad 145 so as to contact the brake disc 122. When process 310 is not included in the method 300, the controller 150 implements the disc brake command at process 312 after generating the disc brake command at process 308.

At process 314, the controller 150 determines whether the braking torque was achieved. For example, the controller 150 can compare the braking torque applied by the brake assembly 120, either alone or in combination with the engine braking torque from the engine 102 and/or the service brake torque form the service brakes, to the predetermined threshold.

Responsive to the braking torque being at or above the predetermined threshold, the method 300 proceeds to process 316. At process 316, the controller 150 releases the brake. For example, the controller 150 may cease implementing the disc brake command to release the brake, thereby causing the actuator 142 to position the brake pad 145 so as to disengage the brake pad 145 from the brake disc 122. In another example, the controller 150 may implementing the brake release command that causes the actuator 142 to position the brake pad 145 so as to disengage the brake pad 145 from the brake disc 122.

Responsive to the braking torque being below the predetermined threshold, the method 300 proceeds to process 318. At process 318, the controller 150 maintains the brake. For example, the controller 150 may continue implementing the disc brake command, thereby causing the actuator 142 to maintain the position the brake pad 145 contacting the brake disc 122.

At process 320, the controller 150 receives a disc brake temperature (e.g., a temperature value regarding the brake disc 122). In some embodiments, when the method 300 includes process 320, process 320 is performed before process 308. For example, process 320 may be performed concurrently, partially concurrently, or sequentially with process 302.

At process 322, the controller 150 compares the temperature value to a predetermined temperature threshold. Responsive to the temperature value being at or above the temperature threshold, the method 300 proceeds process 312. Responsive to the temperature value being below the temperature threshold, the method 300 proceeds to process 324.

At process 324, responsive to the temperature value being at or above a temperature threshold, the controller 150 prevents the actuator 142 from positioning the brake pad 145 to contact the brake disc 122. For example, the controller 150 may prevent the disc brake command from being generated and/or may prevent the disc brake command from being implemented. In some embodiments, after process 324, the method 300 may return to process 320. In some embodiments, when the method 300 includes process 324, process 324 is performed before process 308. For example, process 320 may be performed concurrently, partially concurrently, or sequentially with process 302, process 304, and/or process 306. In other embodiments, process 324 is performed after process 308 and before process 312. For example, process 324 may be performed during the predetermined time period of process 310.

Responsive to the temperature value being below the temperature threshold, the controller 150 may implement the disc brake command at process 312 (subsequent to generating the disc brake command). That is, the disc brake command is implemented responsive to the temperature value being below the temperature threshold.

While this specification contains many specific implementation details, these should not be construed as limitations on the scope of what may be claimed but rather as descriptions of features specific to particular implementations. Certain features described in this specification in the context of separate implementations can also be implemented in combination in a single implementation. Conversely, various features described in the context of a single implementation can also be implemented in multiple implementations separately or in any suitable subcombination. Moreover, although features may be described as acting in certain combinations and even initially claimed as such, one or more features from a claimed combination can, in some cases, be excised from the combination, and the claimed combination may be directed to a subcombination or variation of a subcombination.

As utilized herein, the terms "substantially," "generally," "approximately," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the appended claims.

The term "coupled" and the like, as used herein, mean the joining of two components directly or indirectly to one another. Such joining may be stationary (e.g., permanent) or moveable (e.g., removable or releasable). Such joining may be achieved with the two components or the two components and any additional intermediate components being integrally formed as a single unitary body with one another, with the two components, or with the two components and any additional intermediate components being attached to one another.

It is important to note that the construction and arrangement of the various systems shown in the various example implementations is illustrative only and not restrictive in character. All changes and modifications that come within the spirit and/or scope of the described implementations are desired to be protected. It should be understood that some features may not be necessary, and implementations lacking the various features may be contemplated as within the scope of the disclosure, the scope being defined by the claims that follow. When the language "a portion" is used, the item can include a portion and/or the entire item unless specifically stated to the contrary.

References herein to the positions of elements (e.g., "top," "bottom," "above," "below," "left," "right") are merely used to describe the orientation of various elements in the FIGURES. It should be noted that the orientation of various elements may differ according to other exemplary embodiments, and that such variations are intended to be encompassed by the present disclosure.

Also, the term "or" is used, in the context of a list of elements, in its inclusive sense (and not in its exclusive sense) so that when used to connect a list of elements, the term "or" means one, some, or all of the elements in the list. Conjunctive language such as the phrase "at least one of X, Y, and Z," unless specifically stated otherwise, is otherwise understood with the context as used in general to convey that an item, term, etc. may be either X, Y, Z, X and Y, X and Z, Y and Z, or X, Y, and Z (i.e., any combination of X, Y, and Z). Thus, such conjunctive language is not generally intended to imply that certain embodiments require at least one of X, at least one of Y, and at least one of Z to each be present, unless otherwise indicated.

## Claims

1. An engine system comprising:
an engine;
a crankshaft operatively coupled to the engine;
a brake assembly comprising a brake disc, the brake disc coupled to the crankshaft; and
an actuator assembly comprising:
a brake pad that is selectively positionable to contact the brake disc; and
an actuator configured to selectively position the brake pad to contact the brake disc.

2. The engine system of claim 1, further comprising:
(a) a driveline coupled to the crankshaft at a crankshaft first end, wherein the brake assembly is coupled to the crankshaft at a crankshaft second end, opposite the crankshaft first end, or
(b) a compressed gas source, wherein:
the actuator is configured to selectively cause the compressed gas source to provide gas to the brake pad, and
when the compressed gas source provides the gas to the brake pad, the brake pad contacts the brake disc, or
(c) a vibration damper coupled to the crankshaft, the vibration damper mitigating vibrations in the crankshaft when the brake pad is in contact with the crankshaft, or
(d) a radiator assembly positioned proximate the brake assembly, the radiator assembly facilitating heat exchange between air flowing proximate the brake assembly and a working fluid, thereby cooling the brake assembly.

3. The engine system of claim 1, further comprising a controller configured to:
receive data regarding operation of the engine system;
determine a braking torque value based on the received data;
responsive to the braking torque value being above a predetermined threshold, generate a disc brake command; and
implementing the disc brake command comprising causing the actuator to position the brake pad so as to contact the brake disc.

4. The engine system of claim 3, wherein the predetermined threshold is a maximum braking torque that can be provided by systems other than the brake assembly.

5. The engine system of claim 3, wherein the controller is further configured to:
receive a temperature value regarding the brake disc; and
responsive to the temperature value being at or above a temperature threshold, preventing the actuator from positioning the brake pad to contact the brake disc.

6. The engine system of claim 5, wherein the disc brake command is implemented responsive to the temperature value being below the temperature threshold.

7. The engine system of claim 3, wherein the controller is further configured to:
after implementing the disc brake command, determining whether an applied braking torque is at or above the predetermined threshold; and
responsive to the applied braking torque being at or above the predetermined threshold, performing one of:
ceasing implementing the disc brake command thereby causing the actuator to position the brake pad so as to disengage the brake pad from the brake disc, or
implementing a release brake command comprising causing the actuator to position the brake pad so as to disengage the brake pad from the brake disc.

8. The engine system of claim 7, wherein the controller is further configured to, responsive to the applied braking torque not being at or above the predetermined threshold, continuing to implement the disc brake command, thereby causing the actuator to maintain a position of the brake pad in contact with the brake disc.

9. A method of operating a brake assembly for an engine system comprising:
receiving, by a controller, data regarding operation of the engine system, the engine system comprising the brake assembly having a brake disc and an actuator assembly having a brake pad and an actuator;
determining, by the controller, a braking torque value based on the received data;
responsive to the braking torque value being above a predetermined threshold, generating, by the controller, a disc brake command; and
implementing, by the controller, the disc brake command comprising causing the actuator to position the brake pad so as to contact the brake disc.

10. The method of claim 9, wherein the disc brake command is implemented after a predetermined time period beginning after generating the disc brake command.

11. The method of claim 9, further comprising:
receiving, by the controller, a temperature value regarding the brake disc; and
responsive to the temperature value being at or above a temperature threshold, preventing, by the controller, the actuator from positioning the brake pad to contact the brake disc.

12. The method of claim 11, wherein
(a) the disc brake command is implemented responsive to the temperature value being below the temperature threshold, or
(b) the preventing of the actuator from positioning the brake pad to contact the brake disc occurs before generating, by the controller, the disc brake command, or
(c) the preventing of the actuator from positioning the brake pad to contact the brake disc occurs before implementing, by the controller, the disc brake command.

13. The method of claim 9, further comprising:
after implementing the disc brake command, determining whether an applied braking torque is at or above the predetermined threshold; and
responsive to the applied braking torque being at or above the predetermined threshold, performing one of:
ceasing implementing, by the controller, the disc brake command thereby causing the actuator to position the brake pad so as to disengage the brake pad from the brake disc, or
implementing, by the controller, a release brake command comprising causing the actuator to position the brake pad so as to disengage the brake pad from the brake disc.

14. The method of claim 13, wherein the applied braking torque comprises a sum of braking torque applied by the brake assembly and an applied engine braking torque from an associated engine.

15. The method of claim 13, further comprising responsive to the applied braking torque not being at or above the predetermined threshold, continuing to implement, by the controller, the disc brake command, thereby causing the actuator to maintain a position of the brake pad in contact with the brake disc.
